# EUROPEAN PATENT APPLICATION

(11) **EP 4 646 036 A1**
(43) Date of publication of application: **05.11.2025**
(21) Application number: 24173318.7
(22) Date of filing: 30.04.2024
(51) Int. Cl.: H05B 47/19, H01Q 1/00, H04B 7/00, H04B 5/24, H04B 5/79

(54) **WIRELESS COUPLING MODULE**

(71) Applicant: Zumtobel Lighting GmbH, 6850 Dornbirn (AT)
(72) Inventor: Block, Steffen, 6851 Dornbirn (AT)
(74) Representative: Beder, Jens

(57) **Abstract**

A building infrastructure system comprises at least a first and a second subsystem. The first and the second subsystem each comprise plural infrastructure devices that each include a communication node connected in a wireless mesh communication network topology to other communication nodes. The first and the second subsystem are arranged at different sides of a barrier, e.g. a building barrier such as a wall, ceiling plate or window of the building. At least the first subsystem comprises a first coupling device for connecting the first subsystem and the second subsystem, and the first coupling device is configured to communicate in the first subsystem and to transmit and receive signals to the second subsystem using wireless communication via the barrier. The disclosure also concerns a wireless coupling device for the building infrastructure system.

## Description

The disclosure is in the field of building infrastructure systems, in particular lighting systems and wireless control of lighting systems. The disclosure in particular concerns a building infrastructure system, and a wireless coupling device for a communication network for controlling the building infrastructure system.

Controlling the functionalities of building infrastructure systems using wired connections for transmitting control signals is increasingly supplemented or replaced by transmitting control signals via wireless links in a mesh network,

For the specific example of the lighting systems, there exist approaches to use a Bluetooth Low Energy (BLE)-based communication network to control the lighting system via smart devices.

Nevertheless, using wireless links in a building environment has challenges. Walls and ceiling plates of reinforced concrete, for example, attenuate electromagnetic waves significantly and thereby increase signal losses and reduce the attainable range of wireless communication. Suppliers in the field of building infrastructure regularly exclude wireless control of building infrastructure devices extending beyond the space of one room.

The mentioned problems with wireless links become more severe, when the building infrastructure system includes devices arranged in the exterior of the building. Outer walls with an improved thermal insulation and glass planes of windows with reduced heat transition coefficients and improved sound insulation even increase losses for electromagnetic waves for wireless communication. Environmental effects including rain or snow add further losses, which only occur outside of buildings. On the other hand, controlling elements, e.g. blinds, exterior lighting, path lighting for access paths, parking areas, company signs, etc. , arranged outside the building with requiring elaborate and costly wired connections, that also reduce thermal efficiency of a building is desirable.

It is an object of the invention to improve spatial coverage of wireless control networks infrastructure with regard to availability of simplicity and cost effectiveness.

The building infrastructure system according to independent claim 1 and the coupling device, according to the corresponding independent claim provide an advantageous solution to the aforementioned problem.

The dependent claims define further advantageous embodiments.

A building infrastructure system in a first aspect comprises at least a first and a second subsystem. The first and the second subsystem each comprise plural infrastructure devices that each include a communication node connected via a wireless mesh communication network. The first and the second subsystem are arranged at different sides of a barrier. At least the first subsystem comprises a first coupling device for connecting the first subsystem and the second subsystem, and the first coupling device is configured to communicate in the first subsystem and to transmit and receive signals to the second subsystem using wireless communication via the barrier.

Instead of using through-holes in walls or windows fora wired connection, the disclosed approach uses a wireless link. Due to avoiding through-holes, essential elements of current building walls that include, e.g., a vapor barrier, thermal insulation, or sound-insulation according to increasingly strict standards may remain intact and not affected by the through-holes. The building infrastructures system 1 therefore decreases cost associated with fulfilling the mentioned standards for buildings.

The building infrastructure system enables to create a mesh communication network over an entire building using wireless communication nodes that requires only minimum wiring, e.g. for power supply of individual infrastructure devices, and extends over an entire building with a plurality of rooms, and even beyond the building into the environment adjacent to the building. The building infrastructure system does not end at barriers such as walls, but overcomes barriers by the dedicated first coupling device.

The building infrastructure system enables users, e.g. cleaning personnel or security personnel, to control large portions of the building infrastructure covering a plurality of rooms separated by barriers for conventional wireless communication using one mobile device without having to access each room individually for switching on or off the lights.

According to an embodiment of the building infrastructure system, the second subsystem comprises a second coupling device configured to receive from and transmit signals to the first coupling device using the wireless communication via the barrier and to communicate in the second subsystem.

Using a combination of the first and the second coupling device for providing wireless communication enables to overcome barriers such as solid walls of reinforced concrete due to the possibility to adapt the electromagnetic waves between the first and the second coupling device to the specific characteristics of the propagation medium. The first and the second coupling device may, e.g. use antennas with high gain and high directivity for transmission and reception of wireless signals, thereby ensuring sufficient received signal power at a receiver of the wireless communication.

In an embodiment, the building infrastructure system, the first coupling device and the second device are arranged adjacent to each other on opposing sides of the barrier.

Hence, a good coupling between the first and the second coupling device exists and low transmission losses can be expected for electromagnetic waves propagating between the first and the second coupling device.

According to an embodiment of the building infrastructure system, the first coupling device and the second coupling device each include an antenna with an antenna pattern adapted to transmit and receive the wireless signals to and from the respective other of the first coupling device and the second coupling device.

Hence, a good coupling between the first and the second coupling device exists and low transmission losses can be expected for electromagnetic waves propagating between the first and the second coupling device. The antennas preferably include an antenna pattern that is optimized with regard to achieving a high gain in main beam direction, small 3dB-beamwidth, and a high directivity. This ensures a high received signal power at the receiver for the wireless communication. Using such antennas is highly unusual in combination with wireless mesh networks, but advantageous in combination with the combination of the first coupling device and the second coupling device.

According to an embodiment of the building infrastructure system, the antenna of the first coupling device and the second coupling device each include the antenna pattern configured to transmit and receive the wireless signals towards a mounting plane of the first coupling device or the second coupling device for mounting the first coupling device or the second coupling device attached to the barrier.

The unusual arrangement of the antenna with an antenna pattern that that is optimized with regard to achieving a high gain in the main beam direction, small 3dB-beamwidth, and a high directivity towards the mounting plane of the first and second coupling device on the barrier ensures sufficient received power at the input of the receiving end of the wireless communication across the barrier.

In an embodiment, the building infrastructure system, the first coupling device and the second coupling device each include a transfer element configured to transfer wirelessly energy between the first coupling device and the second coupling device through the barrier.

Transferring energy (electric energy) wirelessly through the barrier, either by near field coupling using either magnetic fields in inductive coupling, electric fields in capacitive coupling, or by far field coupling using electromagnetic fields, enables to supply one of the first and second coupling devices with electric power without having to provide a direct wired connection to the mains grid of the building, or the respective other coupling device of the first and second coupling devices. Hence, the cost for installing the first and second coupling devices is advantageously low.

The building infrastructure system of an embodiment comprises the transfer element of the first coupling device and of the second coupling device each including a coil magnetically coupled to respectively each other and arranged on a common axis of the first coupling device and the second coupling device extending through the barrier perpendicular to opposing surfaces of the barrier.

Hence, the arrangement of the coils achieve a high transfer rate while transferring electric power between the first and second coupling device through the barrier using the established techniques of inductive wireless power transfer and inductive charging currently not used in the field of building infrastructure systems.

According to an embodiment of the building infrastructure system, the second coupling device comprises a satellite receiver configured to receive a satellite signal from at least one satellite. The second coupling device is configured to transmit at least one of the received satellite signal and information included in the received satellite signal to the first coupling device using the wireless communication via the barrier.

Satellite communication is severely affected or even not possible when a satellite receiver with its antenna is arranged within a building. Signal losses for satellite signals traversing barriers such as roofs and walls are significant. Multipath propagation further decreases the received power at the satellite receiver input. Arranging the second coupling device at least with an integrated antenna, possibly also including a satellite receiver externally to the building of the building, and the first coupling device in the interior of the building enables to benefit from satellite signals even at the communication nodes of the first subsystem within the building.

The satellite signal may be a communication signal, a navigation signal, or a time information signal, or a combination thereof.

In an embodiment, the building infrastructure system, the information included in the satellite signal comprises current time information.

Thereby, the second coupling device may require time information including a current time even after all communication nodes lost the current time, e.g., due to a temporary power loss. A costly communication node including a battery-backed data storage for storing the time information is not necessary in order to reacquire system time information in the building infrastructure system. The effort for a re-commissioning of the building infrastructure system after time of an extended loss of grid power, e.g. during a holiday closure of a manufacturing site, is not necessary and significant cost are saved.

The building infrastructure system of an embodiment comprises the information included in the satellite signal including navigation information. The navigation information may be navigation satellite information. Navigation satellite information enables a navigation satellite receiver to determine both current time information and location information for the building infrastructure system.

Navigation information enables to determine a missing location information of the building infrastructure system 1. The building infrastructure system may control actuators, e.g. luminaires based on the current time and simultaneously the location of the building infrastructure system, thereby providing automatically adapted illumination for the respective time of the year, time of the day and adapted to the current season. Adapted illumination may include adjusted lighting illumination levels or adjusted color temperatures of the light, or a combination thereof.

According to an embodiment of the building infrastructure system, the first coupling device is configured to directly transmit and receive signals to at least one of the building infrastructure devices, in particular its associated communication node, of the second subsystem using wireless communication via the barrier.

In particular, barriers with a low wireless signal attenuation may enable communicate directly with communication nodes located at the other side of the barrier than the first communication device. This is particular advantageous in cases in which antenna pattern of an antenna of the first coupling device covers a large proportion of the space on the opposite side of the barrier, and is therefore less sensitive with regard to the exact positioning of the building infrastructure device, in particular its associated communication node, of the second subsystem.

In an embodiment of the building infrastructure system, the barrier includes at least one of a window, an interior wall, a ceiling, an exterior wall, and a roof of a building.

The building infrastructure system of an embodiment, includes at least the first subsystem comprising at least one further first coupling device for connecting the first subsystem and the second subsystem, and the first coupling device and the at least one further first coupling device are configured to communicate in the first subsystem and to transmit and receive signals to the second subsystem using wireless communication via the barrier.

Preferably, the building infrastructure system comprises the at least one second subsystem including at least one further second coupling device in addition to the second coupling device for connecting the communication nodes of the second subsystem to the first subsystem via the barrier. The second coupling device and the at least one further second coupling device are configured to communicate in the second subsystem. Furthermore, the second coupling device and the at least one further second coupling device transmit and receive signals to the first coupling devices of the first subsystem using respectively independent wireless communication links via the barrier.

Hence, the first subsystem and the second subsystem of the building infrastructure system have a reliable connection between subsystems with a high immunity against link failures of individual wireless communication links or failures of communication nodes due to the redundancy of at least two wireless communication links through the barrier, although no additional through-holes for a wired connection are necessary.

A wireless coupling device for a building infrastructure system according to the second aspect comprises a communication node configured to receive from and transmit to a communication node of at least one building infrastructure device of a first subsystem of the building infrastructure system signals via a wireless mesh communication network. The wireless coupling device further comprises a communication element configured to receive from and transmit signals to at least one second subsystem of the building infrastructure system using wireless communication via a barrier separating the first subsystem and the second subsystem.

The wireless coupling device according to the second aspect achieves corresponding advantageous effects as discussed with reference to the building infrastructure system of the first aspect.

The following description of embodiments refers to the figures, in which
Fig. 1 shows a basic application scenario including a building infrastructure system according to an embodiment;
Fig. 2 provides an overview over the structure and functional elements of a coupling device for a building infrastructure system;
Fig. 3 shows a further application scenario including redundancy in the architecture of a building infrastructure system according to a second embodiment;
Fig. 4 shows a further application scenario including direct power supply in the architecture of a building infrastructure system according to a third embodiment;
Fig. 5 shows a further application scenario including indirect power supply in the architecture of a building infrastructure system according to a fourth embodiment;
Fig. 6 shows a further application scenario including a building infrastructure system according to a fifth embodiment;
Fig. 7 illustrates an application scenario including coupling of distant rooms via a corridor using a building infrastructure system according to an embodiment; and
Fig. 8 shows an application scenario that illustrates directly connecting communication nodes though a building wall using a building infrastructure system according to an embodiment.

In the figures, corresponding elements have the same reference signs. The discussion of the figures avoids discussion of same reference signs in different figures wherever considered possible without adversely affecting comprehensibility in order to avoid unnecessary repetitions for sake of conciseness.

Generally, the disclosed embodiment refers to a building infrastructure system 1 that includes the lighting system of a building. The lighting system includes a plurality of devices that include, for example luminaires, fixed input devices for a user to control the lighting, e.g., switches, dimmers, push buttons, rotary switches, and apps running on mobile personal devices of individual users.

The building infrastructure system 1 may also include other or further systems than the mentioned lighting system, e.g., heating, ventilation and air conditioning (HVAC) systems either in a combined system or as individual systems, a security system, e.g., a perimeter intrusion detection system (PIDS) or a building intrusion detection system, a fire alarm system,

Users may include employers of companies based in the building, but also staff tasked with maintaining the building and its surroundings, e.g. security personnel and cleaning personnel.

Interfaces for controlling the building infrastructure system 1 via apps on mobile wireless devices, e.g., smartphones and tablets, largely benefit from the additional networking capabilities provided by the disclosed building infrastructure system 1, which comprises a plurality of infrastructure devices that each include a communication node 9 connected in a mesh communication network with communication nodes 9. The mesh communication network uses wireless communication 10 (wireless communication links 10) between the communication nodes 9.

The infrastructure devices include, but are not limited to luminaires, input devices, central light servers, personal mobile devices with an installed building infrastructure control app (application program), presence detectors, ambient light sensors, temperature sensors, fire detecting sensors, smoke detecting sensors, gas sensors such as carbon dioxide sensors and carbon monoxide sensors, humidity sensors, and actuators, e.g., actors controlling blinds, smoke flues, doors, windows, route-indicating signs.

A mesh network is a communication network topology in which communication nodes 9, e.g. bridges, switches, and other devices connect directly, dynamically and non-hierarchically to as many other communication nodes 9 as possible and cooperate with one another to efficiently route data to and from clients. Every communication node 9 is capable to participate in relaying information through the communication network. Mesh networks may dynamically self-organize and self-configure, which reduces installation effort. The ability to self-configure enables dynamic distribution of workloads, particularly in the event some communication nodes 9 fail. This in turn contributes to increasing fault-tolerance and reducing maintenance costs.

An example for a wireless personal area mesh network is Bluetooth mesh based on Bluetooth Low Energy (BLE) wireless links between communication nodes 9 that enables many-to-many communication over Bluetooth radio. The Bluetooth mesh specification is a mesh network standard that uses a flood network principle that bases on the nodes relaying the messages to other communication nodes 9. Every relay node that receives a network packet that authenticates against a known network key that is not in message cache and that has a time- to-live (TTL) ≥ 2 is be retransmitted with an updated TTL^{updated}, which fulfills the expression TTL^{updated} = TTL -1. The caching of messages enables to prevent relaying messages already recently received. Communication is carried in messages that may be up to 384 bytes long, when using segmentation and reassembly (SAR) mechanism, but most of the messages fit in one segment that is 11 bytes. Every message has a source and a destination address, which determine which communication node 9 processes the message. communication node 9 may transmit (publish) messages to destinations, which can be single communication node 9, groups of communication nodes 9, or all d communication nodes 9 in the network.

The message has a sequence number that protects the mesh network against replay attacks.

The message is encrypted and authenticated. Two keys are used to secure messages: first, network keys that are allocated to a single mesh network; second, application keys that are specific for a given application functionality, e.g. turning the light on vs reconfiguring the light. Messages have a time to live a time-to-live (TTL). Each time message is received and retransmitted, the TTL is decreased by 1. Decrementing the TTL limits the number of hops for a message along the links of the mesh network, thereby eliminating endless loops.

Bluetooth Mesh has a layered architecture, with multiple layers.

Bluetooth Low energy (BLE) is a wireless personal area network technology (WPAN) defining profiles, which refers to specifications for how a communication node 9 (device) works in a particular application for low energy devices. Bluetooth mesh profiles use BLE to communicate with other BLE devices in the network. Each device can pass the information forward to other Bluetooth Low Energy devices creating the mesh structure. A typical application scenario includes switching off the lights of an entire building by issuing a command from a single smartphone running a suitable application (program, app). The radio link defined by BLE has 40 channels of 2-MHz bandwidth in the ISM-Band between 2400 and 2500 GHz. Within a channel, data is transmitted using Gaussian frequency shift modulation, with a bit rate is 1 Mbit/s and with an option of 2 Mbit/s in Bluetooth level 5. The maximum transmit power is 10 mW, and 100 mW in Bluetooth level 5. BLE uses frequency hopping to counteract narrowband interference problems. BLE is a communication system using a digital modulation technique or a direct-sequence spread spectrum (DSSS) technique.

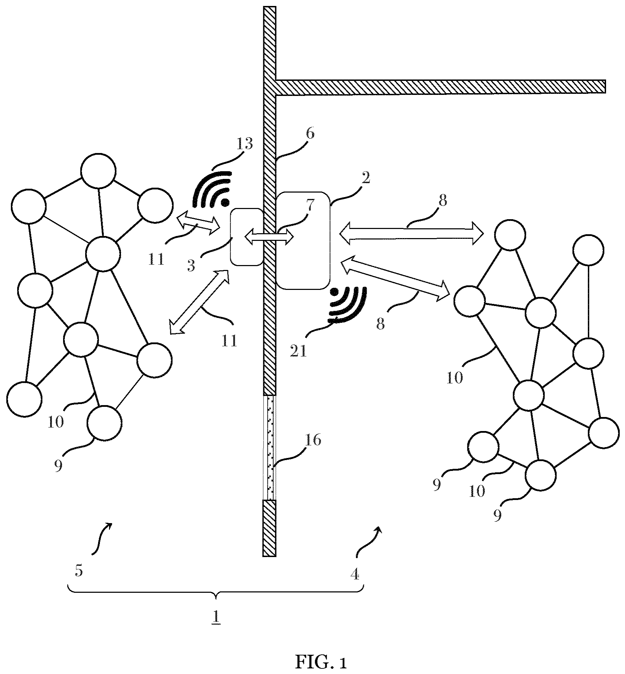

Fig. 1 shows a basic application scenario including a building infrastructure system 1 according to an embodiment.

The building infrastructure system 1 comprises at least a first subsystem 4 and a second subsystem 5.

The first subsystem 4 and the second subsystem 5 each comprise plural infrastructure devices not explicitly illustrated in fig. 1 that each include a communication node 9 connected via a wireless communication 10 (wireless communication link 10) to at least one other communication node 9. Hence, the communication nodes 9 of the building infrastructure system 1 are connected in a wireless mesh communication network by the plurality of wireless communication links 10.

The first subsystem 4 and the second subsystem 5 are arranged at different sides of a barrier 6. The barrier 6 may include at least one of a window 16, a door, an interior wall, a ceiling, an exterior wall, and a roof of a building.

At least the first subsystem 4 of the building infrastructure system 1 comprises a first coupling device 2 for connecting the first subsystem 4 and the second subsystem 5 of the building infrastructure system 1. The first coupling device 2 is configured to communicate in the first subsystem 4, e.g. with at least one communication node 9 belonging to the first subsystem 4 using a wireless communication link 10. The first coupling device 2 is configured to transmit signals to the second subsystem 5 of the building infrastructure system 1 and to receive signals from the second subsystem 5 using wireless communication 7 via the barrier 6.

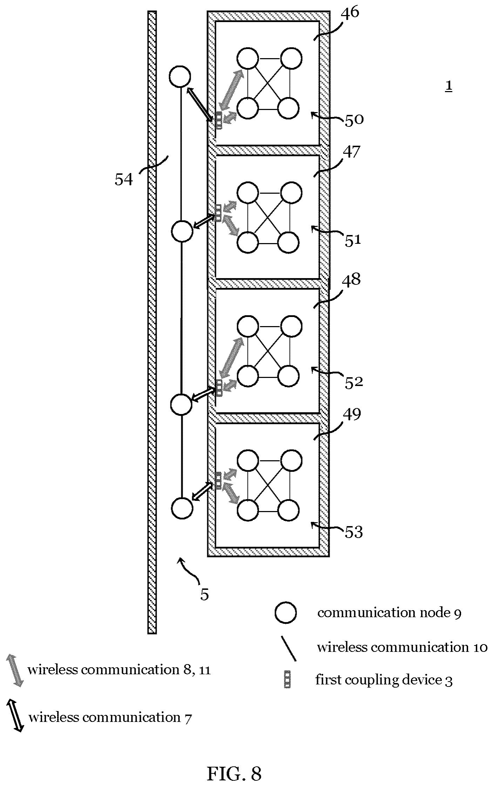

The first coupling device 2 may communicate directly with communication nodes 9 of the second subsystem 5 as discussed with reference to fig. 8 that differs from dedicated second coupling device 3 that is illustrated in fig. 1.

Alternatively and according to the embodiment of fig. 1, the first coupling device 2 transmits wireless signals to a second coupling device 3 included in the second subsystem 5 of the building infrastructure system 1, and receives wireless signals from the second coupling device 3 of the second subsystem 5 using the wireless communication 7 (wireless communication link 7) via the barrier 6.

In fig. 1, the first coupling device 2 and the second coupling device 3 are arranged adjacent to each other on opposing sides of the barrier 6. In particular, the first coupling device 2 and the second coupling device 3 are arranged on the opposing sides of the barrier 6 relative to each other such that an antenna of the first coupling device 2 and a corresponding antenna of the second coupling device 3 that are used in the wireless communication 7 between the first coupling device 2 and the second coupling device 3 provide a reliable transfer of electromagnetic waves used in the wireless communication 7 through the barrier 6.

The wireless communication 7 between the first coupling device 2 and the second coupling device 3 may use a same wireless transmission standard, as the wireless communication 8 from the first coupling device 2 to the communication nodes 9 of the first subsystem 4. The wireless communication 7 between the first coupling device 2 and the second coupling device 3 may uses the same wireless transmission standard, as the wireless communication 11 between the second coupling device 3 to the communication nodes 9 of the second subsystem 5.

Alternatively, the wireless communication 7 between the first coupling device 2 and the second coupling device 3 may use a different wireless transmission standard, as the wireless communication 8 from the first coupling device 2 with communication nodes 9 of the first subsystem 4, the wireless communication 11 between the second coupling device 3 with communication nodes 9 of the second subsystem 5, and the wireless communication 10 between the communication nodes 9 of the first and second subsystems 4, 5 of the building infrastructure system 1. In this embodiment, the wireless communication 7 between the between the first coupling device 2 and the second coupling device 3 may use a specific communication standard, and/or specific parameters of the wireless communication 7 that provide improved transmission of the electromagnetic waves of the wireless communication 7 through the barrier 6. For example, the wireless communication 7 may use lower transmission frequencies, and/or an increased radiated transmission power level when compared to the wireless communication 8, 10, 11 between the communication nodes 9 optimized for free-space wireless communication.

The first coupling device 2 and the second coupling device 3 each include their antenna with an antenna pattern that is designed to transmit and receive the wireless signals of the wireless communication 7 to and from the respective other of the first coupling device 2 and the second coupling device 3.

The antenna of the first coupling device 2 and the antenna of the second coupling device 3 each include the antenna pattern configured to transmit and receive the wireless signals of the wireless communication 7 towards a mounting surface 29 of a housing 28 of the first coupling device 2 or the second coupling device 3. The mounting surface 29 is adapted to mount the first coupling device 2 or the second coupling device 3 attached to the barrier 6, in particular a plan surface 6.1, 6.2 of the barrier 6.

In the embodiment of the building infrastructure system 1 depicted in fig. 1, the second subsystem 5 comprises the second coupling device 3 configured to receive wireless signals from the first coupling device 2 and transmit wireless signals to the first coupling device 2 using the wireless communication 7 via the barrier 6. The second coupling device 3 is configured to communicate in the second subsystem 5, e.g., with at least one communication node 9 of the second subsystem 5.

Instead of using through-holes in walls or windows for a wired connection, the building infrastructure system 1 uses a wireless connection. Due to avoiding through-holes, essential elements of building walls that include, e.g., a vapor barrier, thermal insulation, or sound-insulation designed according to strict building standards may remain intact and are not affected by the through-holes for communication. The building infrastructures system 1 therefore decreases cost associated with fulfilling the mentioned standards for buildings when installing the smart building infrastructure system 1.

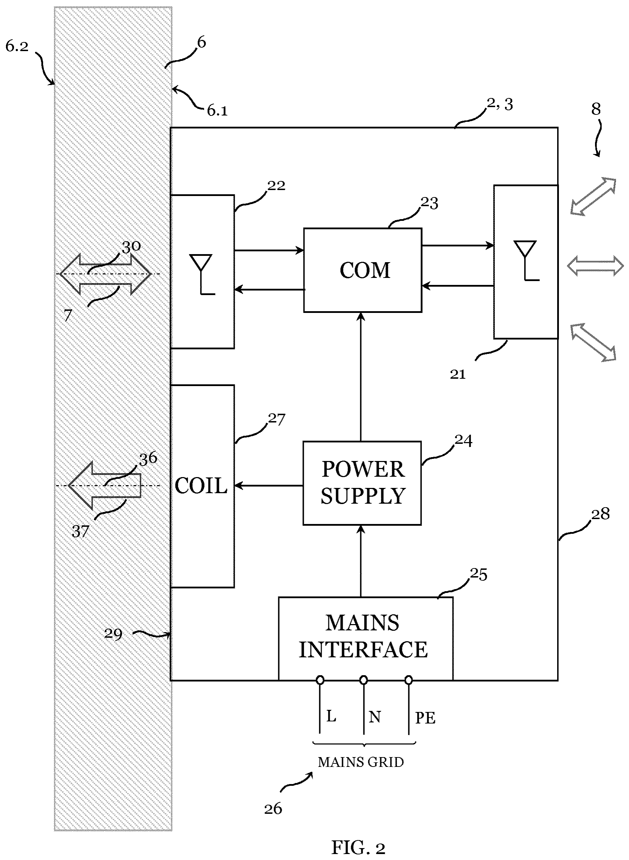

Fig. 2 provides an overview over the structure and functional elements of a coupling device 2, 3 for a building infrastructure system 1.

The coupling device 2, 3 (coupling module 2, 3) of fig. 2 may act as the first coupling device 2 and the second coupling device 3 in the building infrastructure system 1 shown in fig. 1. The coupling device 2, 3 is a wireless coupling device that operates as a node in a wireless mesh communication network.

The description of fig. 2 refers to the first coupling device 2 (coupling device 2). The discussion applies to the second coupling device 3 of the second subsystem 5 in a corresponding manner.

The wireless coupling device 2 for the building infrastructure system 1 comprises a communication node 21 configured to receive wireless signals from other communication nodes 9 of the building infrastructure system 1 via the wireless communication 7. The communication node 21 further transmits wireless signals to other communication nodes 9 of the building infrastructure system 1 via the wireless communication 7. The communication node 21 may have the same functionality and structure as the other communication nodes 9 associated with at least one building infrastructure device of the first subsystem 4 of the building infrastructure system 1.

The wireless communication 8 (wireless communication link 8) is a bidirectional communication.

In particular, the communication node 21 includes a wireless transmitter and a wireless receiver for transmitting and receiving wireless signals in at least one wireless communication standard, e.g., BLE, in a mesh communication network, e.g. Bluetooth mesh. A wireless transceiver may combine the functions of the wireless transmitter and receiver.

The communication node 21 includes at least one antenna (first antenna) for radiating and receiving electromagnetic waves in a frequency band defined by the at least one wireless communication standard. The at least one first antenna has an antenna pattern that is designed to transmit and receive the wireless signals into and from a first half-space in which the first subsystem 4 of the building infrastructure system 1 is present.

The first antenna may have an antenna pattern, which radiates electromagnetic waves with a first directivity and a first antenna gain into the first-half space. The first half-space extends from the barrier 6, in particular from the surface 6.1 of the barrier into the space of the building or room, in which the communication nodes 9 of the first subsystem 4 are located.

The coupling device 2 further includes a communication element 22 configured to receive wireless signals from the at least one second subsystem 5 and transmit wireless signals to the second subsystem 5 of the building infrastructure system 1 using the wireless communication 7 via the barrier 6 that separates the first subsystem 4 and the second subsystem 5.

The communication element 22 includes a wireless transmitter and a wireless receiver for transmitting and receiving signals in wireless communication 7 in at least one wireless communication standard in a mesh communication network. A wireless transceiver may combine the functions of the wireless transmitter and receiver.

The wireless communications standard may be the same communication standard as applied for the wireless communication 8 to the communication nodes 9 of the first subsystem 4.

The communication element 22 includes at least one antenna (second antenna) for radiating and receiving electromagnetic waves in a frequency band defined by the at least one wireless communication standard used for the wireless communication 7. The at least one second antenna has an antenna pattern that is designed to transmit and receive the wireless signals into a second half-space in which the second subsystem 5 of the building infrastructure system 1 is present.

The coupling device 2 includes a housing 28 that encloses the functional elements, e.g. the communication node 21, the communication element 22, and the communication element 23 of the coupling device 2. The housing 28 may have an essentially planar section 29, which enables mounting the coupling device 2 to the planar surface 6.1 of the barrier 6 pointing towards the first half-space.

The second antenna has an antenna pattern (second antenna pattern) configured to transmit and receive electromagnetic waves of the signals of the wireless communication 7 towards the mounting surface 29 of the housing 28 of the coupling device 2 adapted to mount the first coupling device 2 or the second coupling device 3 attached to the barrier 6.

The second antenna pattern may have a directivity (directionality) that is significantly larger than the directivity of the first antenna pattern of the first antenna. In this case, a 3dB bandwidth of the second antenna pattern is significantly smaller than a 3dB- bandwidth of the first antenna pattern of the first antenna included in the communication node 21. This is advantageous in a situation in which the second subsystem 5 in the second half-space includes the second coupling device 3 arranged directly adjacent to the first coupling device 2 on a planar surface 6.2 of the barrier 6 opposite to the planar surface 29.

A main radiating direction 33 of the second antenna pattern of the second antenna may be perpendicular to the planar surface 29 of the housing 28. The main radiating direction 33 of the second antenna pattern of the second antenna is then equally perpendicular to the planar surface 6.1 of the barrier 6, when the coupling device 2 is mounted at the barrier 6.

The wireless communication 7 is a bidirectional communication.

The coupling device 2 further includes a communication element 23 (transfer element 23, communication module 23). The communication element 23 transfers signals received by wireless communication 8 from the first subsystem 4, in particular to at least some of the communication nodes 9 of the first subsystem 4, via the communication node 21 to the communication element 22 for transmission to the second subsystem 5. The communication element 23 transfers signals received by wireless communication 7 from the second subsystem 5 via the communication element 22 to the communication node 21 for transmission to the first subsystem 4, in particular to at least some of the communication nodes 9 of the first subsystem 4.

The communication element 23 may include signal filters and signal amplifier circuits. The communication element 23 includes electric circuitry with active components, in particular integrated circuits including operational amplifiers.

The communication element 23 may include converting circuits that convert signals received via wireless communication 7 from the second subsystem 5 to wireless signals for communication via wireless communication 8 to the communication nodes 9 of the first subsystem 4.

The communication element 23 may include converting circuits that convert signals received via wireless communication 8 from the communication nodes 9 of the first subsystem 4 to signals for communication via wireless communication 7 to the second subsystem 5, and vice versa.

The coupling device 2 includes a power supply 24 and a mains grid interface 25. The mains grid interface 25 connects the coupling device with a minas grid of the building, e.g., via connectors L, N, and PE to the mains grid. The mains grid interface 25 provides the power supply 24 with AC power. The power supply 25 generates supply voltages, in particular low voltages, for supplying the other elements and electric circuits of the coupling device 2 with electric power. In particular, the power supply 25 generates at least one supply voltage, for supplying the active electric circuits of the communication element 23 with electric power.

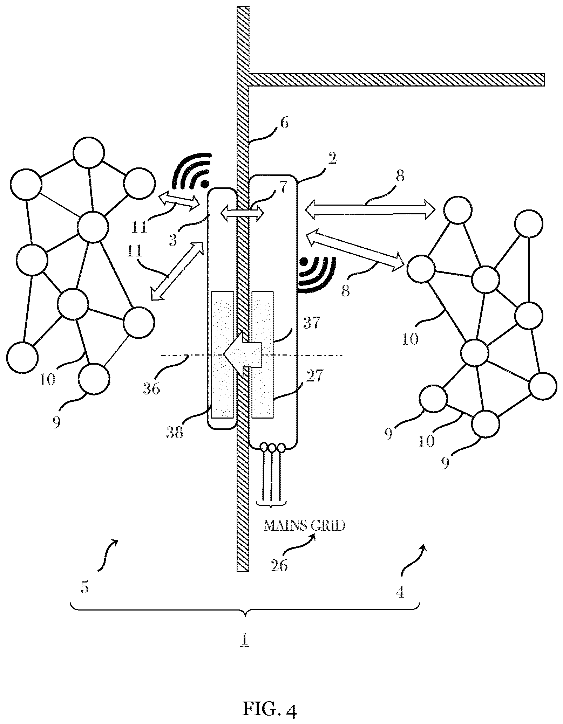

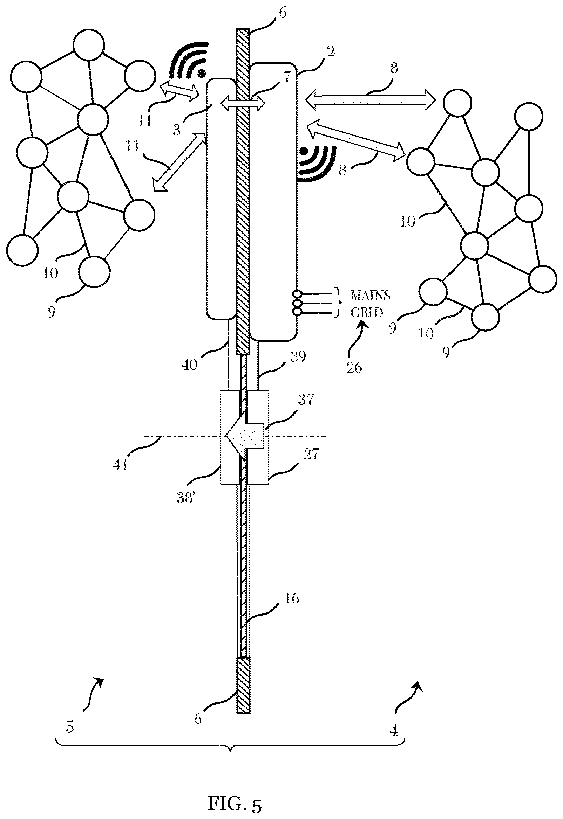

The coupling device 2 of fig. 2 further includes a transfer element 27 (coil 27, inductive element 27). The power supply 25 provides electric power to the transfer element 27 for wireless energy transfer 37 to other devices without requiring connecting wires as a physical link between the coupling device 2 and the respective other device. The other device may in particular include the second coupling device 3, which is supplied with electric power via the transfer element 27 from the first coupling device 2. Different arrangements and specific aspects of the wireless energy transfer 37 from the coupling device 2 to the second coupling device 3 are discussed with reference to figs. 4 and 5.

The transfer element 27 of the first coupling device 2 and a corresponding transfer element of the second coupling device 3 may each include a coil magnetically coupled to the corresponding coil of the respectively each other coupling device of the first and the second coupling device 2, 3. The coils 27 may be arranged on a common axis 36 of the first coupling device 2 and the second coupling device 3 that extends through the barrier 6 essentially perpendicular to the opposing surfaces 6.1, 6.2 of the barrier 6.

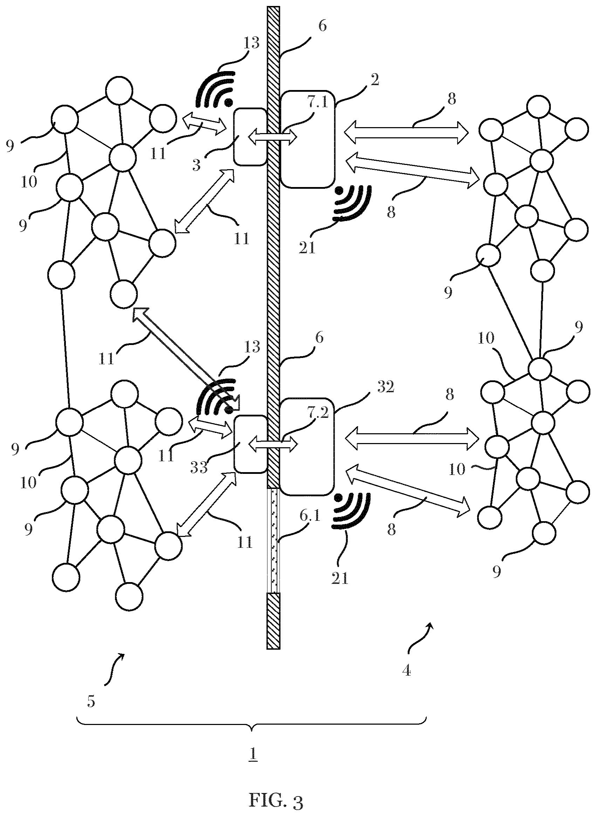

Fig. 3 shows a further application scenario including redundancy in the architecture of a building infrastructure system 1 according to a second embodiment.

The second embodiment of the building infrastructure system 1 of fig. 3 differs from the first embodiment shown in fig. 1 by including two first coupling devices 2, 32 as part of the first subsystem 4 and corresponding two second coupling devices 3, 33 included in the second subsystem 5.

Generally, the building infrastructure system 1 according to the second embodiment comprises the at least the first subsystem 4 including at least one further first coupling device 32 in addition to the first coupling device 2 for connecting the first subsystem 4 to the second subsystem 5 via the barrier 6. The first coupling device 2 and the at least one further first coupling device 32 are configured to communicate in the first subsystem 4. Furthermore, the first coupling device 2 and the at least one further first coupling device 32 transmit and receive signals to the second subsystem 5 using wireless communication 7.1, 7.2 via the barrier 6.

The wireless communication 7.1 of the first coupling device 2 and the at least one wireless communication 7.2 of the at least one further first coupling device 32 are independent from each other.

Preferably, the building infrastructure system 1 according to the second embodiment comprises the at least one second subsystem 5 including at least one further second coupling device 33 in addition to the second coupling device 3 for connecting the communication nodes 9 of the second subsystem 5 to the first subsystem 4 via the barrier 6. The second coupling device 3 and the at least one further second coupling device 33 are configured to communicate in the second subsystem 5. Furthermore, the second coupling device 3 and the at least one further second coupling device 33 transmit and receive signals to the first coupling devices 2, 32 of the first subsystem 4 using respectively independent wireless communication 7.1, 7.2 (wireless communication links 7.1, 7.2) via the barrier 6.

Hence, in the building infrastructure system 1 of the second embodiment, the first subsystem 4 and the second subsystem 5 of the building infrastructure system 1 have a reliable wireless connection between the subsystems 4, 5. The building infrastructure system 1 has a high immunity against failures of individual wireless communication links 7.1, 7.2 via the barrier 6, failures of the first coupling devices 2, 32, failures of the second coupling devices 3, 33, and individual communication nodes 9. The high immunity is achieved by availability of at least two independent communication links 7.1, 7.2 (redundant communication links 7.1, 7.2), through the barrier 6.

Fig. 4 shows a further application scenario including direct power supply in the architecture of a building infrastructure system 1 according to a third embodiment.

The first coupling device 2 of the embodiment of fig. 4 transfers electric power from the first coupling device 2 to the second coupling device 3 of the second subsystem 5. In particular, the third embodiment includes the second coupling device 3 including a second transfer element 38, which is supplied with electric power via the first transfer element 27 of the first coupling device 2.

The first transfer element and the second transfer elements may both include coils that are magnetically coupled by arranging a center axis of the first and second coil 27, 38 on a common axis 36 of the first and second coupling devices 2, 3 when both the first and second coupling device 2, 3 are mounted on opposite surfaces 6.1,6.2 of the barrier 6.

The power supply 25 of the first coupling device 2 drives a current through the first coil 2, which generates a magnetic field in the first coil. The magnetic field is coupled to the magnetic field in the second coil 38 on the other side of the barrier 6, which induces an electric current in the second coil 38. The electric current in the second coil 38 may be used to supply the electric circuitry of the second coupling device 3. A specific power supply via connection to the mains grid 26 for both the first and the second coupling device 2, 3 is now unnecessary, which may significantly reduce installation cost.

Different arrangements and specific aspects of the wireless energy transfer 37 from the coupling device 2 to the second coupling device 3, or vice versa, are possible. One further example with a different mechanical design of the first and second coupling devices 2, 3 will be discussed with reference to fig. 5.

Fig. 5 shows a further application scenario including indirect power supply in the architecture of a building infrastructure system 1 according to a fourth embodiment.

The building infrastructure system according to the fourth embodiment is similar to the building infrastructure system 1 according to a third embodiment. In particular, the first coupling device 2 includes a transfer element 27' for a power transfer to a transfer element 38' of the second coupling device 3.

Different from the third embodiment, the transfer element 27 ' is nor arranged within the housing 28 of the first coupling device 2, but has its own enclosure 39 and is connected via cables to the power supply 25 of the first coupling device 2 arranged within the housing 28. Different from the third embodiment, the transfer element 38 ` is nor arranged within a housing of the second coupling device 3, but also has its own enclosure 40 and is connected via cables 39, 40 to the a power supply of the second coupling device 3 arranged within the housing of the second coupling device 3.

The building infrastructure system 1 according to the fourth embodiment offers an increased flexibility when planning spatial installation of the first and second coupling devices 2, 3, as the transfer element 27' for the power transfer 37 from the first coupling device 2 to the transfer element 38' of the second coupling device 3 may be arranged spatially separate from the arrangement of the second and first antennas for the wireless communication 7 between the first and second coupling devices 2, 3.

For example, the transfer elements 27', 38' may be arranged close to each other on opposite surfaces of the window 16, while the first and second coupling devices 2, 3 are arranged on opposite surfaces of a wall forming part of the barrier 6, wherein the window 16 is also located in the wall according to the situation depicted in fig. 5.

The arrangement of fig. 5 provides a particular good inductive or capacitive coupling between the transfer elements 27', 38', and therefore high efficiency of the energy transfer 37.

The visual appearance of window 16 may be less effected by the transfer elements 27', 38'arranged in their respective own enclosures on the window 16 than when mounting the first and second coupling devices 2, 3 on the window 16.

In a specific embodiment, the transfer elements 27', 38' may be integrated within the window 16, e.g. in a window frame of the window 16 and connected via flexible cables 39, 40 to the first and second coupling devices 2, 3 respectively.

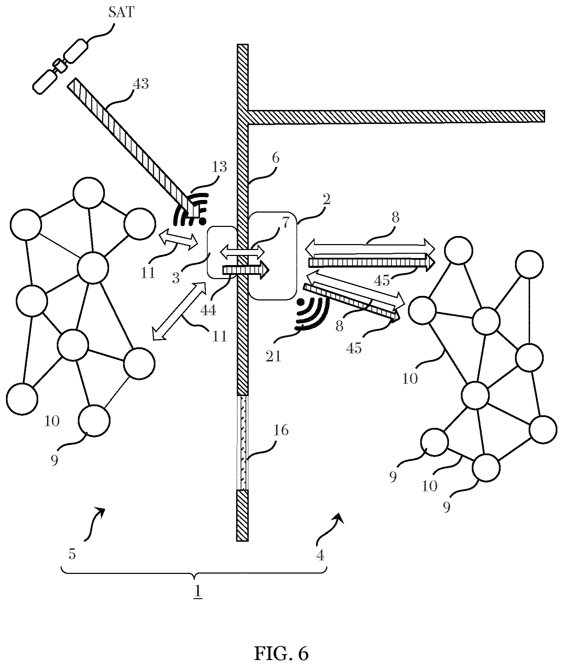

Fig. 6 shows a further application scenario including a building infrastructure system 1 according to a fifth embodiment.

Building infrastructure system 1 may apply time-based scenarios in controlling actuators building infrastructure system 1.

Time-based scenarios may include operating shading devices such as blinds arranged at windows of the building based on a current time, and based on stored profiles that take the varying azimuth of the sun for the time of the year into account. Time-based scenarios may include operating the shading devices and/or heating devices of the building based on a current time and further based on weather information, including weather forecast information.

Alternatively or additionally, time-based scenarios may include operating luminaires of the building based on a current time, time of the day, and taking stored azimuth information of the sun for a current time of the year into account.

Nevertheless, controlling building infrastructure systems 1 using time-based scenarios requires a current system time being present in at least one device of the building infrastructure system 1. Communication via the mesh communication network enables to update and synchronize the system time in case of an accidental partial power loss or temporary deliberate shutdown in the building infrastructure system 1, as long as at least one communication node 9, 21 stores the system time even without having power. Current suppliers offer particular modules for implementing communication nodes 9, 21 in the mesh communication network, which include batteries for bridging specific times without mains grid power, but the improved functionality comes at respectively increased cost and requires battery maintenance and regular replacement in the field.

The fifth embodiment of the building infrastructure system 1 has advantageous features, which also overcome this problem in addition to the advantages already discussed.

The building infrastructure system 1 of the fifth embodiment arranges the first subsystem 4 in the interior of a building. The second subsystem 5 includes the communication nodes of the second subsystem 5 and the second coupling device 3 arranged to the exterior of the building.

The building infrastructure system 1 of the fifth embodiment shown in fig. 6 includes the second coupling device 3 including a satellite receiver configured to receive a satellite signal 43 from at least one satellite SAT. The second coupling device 3 transmits at least received information 44 extracted from the received satellite signal 43 to the first coupling device 2 using the wireless communication 7 via the barrier 6. The first coupling device 2 transmits the received information 44 extracted from the received satellite signal 43, which is received from the second coupling device 3 in respective signals 45 to the communication nodes 9, in particular via wireless communication 10 in the first subsystem 4.

Hence, the communication nodes 9 of the first subsystem 4 also benefit from the information 44 included in the received satellite signal 43.

The restrictions in satellite signal reception due to the external walls and the roof of the building representing barriers 6 for the satellite signal reception do not apply in case of the building infrastructure system 1 according to the fifth embodiment.

Arranging the second coupling device 3 at least with an integrated satellite receive antenna, preferably also including the satellite receiver externally to the building, and the first coupling device 2 in the interior of the building enables to benefit from satellite signal 43 even at the communication nodes 9 of the first subsystem 4.

The satellite signal 43 may be a communication signal, a navigation signal, or a time information signal, or a combination thereof. In particular, the satellite signal 43 is received from a plurality of navigation satellites of a regional or a global navigation satellite system (GNSS). Examples for the GNSS include the Galileo system, the GPS system and the GLONASS system.

The building infrastructure system 1 may use time information included in the satellite signal that comprises current time information.

Thereby, communication nodes of the first and the second subsystem 4, 5 may acquire time information including a current time even after all communication nodes 9 lost the current time, e.g., due to a temporary power loss. A costly communication node that includes a battery-backed data storage for storing the time information is not necessary in order to reacquire system time information in the building infrastructure system 1 of the fifth embodiment.

Even more advantageous is that due to being able to synchronize time with an external and generally available time source, e.g. available via the received satellite signal 43, the building infrastructure system 1 of the fifth embodiment dispenses with the need for an expensive oscillator device that provides a stable time source that avoids the current limitations of building infrastructure devices with internal time sources that have a time drift of 5 to 10 minutes per year. Hence, using time-based scenarios is possible for the building infrastructure system 1.

The building infrastructure system 1 of the fifth embodiment comprises the information included in the satellite signal including navigation information. Navigation satellite information enables a navigation satellite receiver to determine both current time information and location information for the building infrastructure system 1. Hence both location and time -dependent profiles can be used in the building information system 1 according to the fifth embodiment. This applies even in case location information and time information for the entire building infrastructures system 1 have been lost due to a mains power failure for a time.

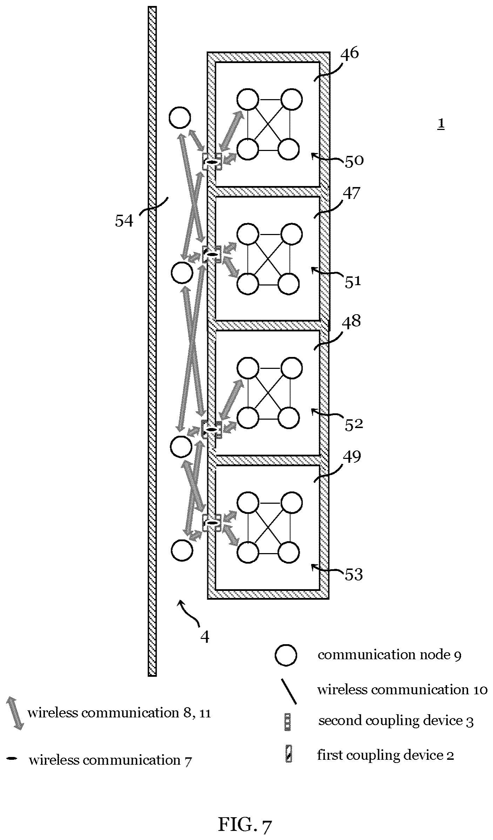

Fig. 7 illustrates an application scenario including coupling of a flight of rooms within a building via an adjacent corridor using a building infrastructure system 1 according to an embodiment.

The building includes a series of rooms 46, 47, 48, and 49. In each of the rooms 46, 47, 48, and 49, a subsystem 50, 51, 52, 53 corresponding to one implementation of the first subsystem 2 is arranged, including a number of communication nodes 9. The communication nodes 9 of each of the subsystems 50, 51, 52, 53 are connected to each other by wireless communication 10 in a fully meshed mesh communication topology.

In parallel to the flight of rooms 46, 47, 48, 49, a corridor 54 extends. In the corridor 54 a further subsystem 57 including four communication nodes 9, wherein each one of the communication nodes 9 of the subsystem 57 is connected to one or two adjacent other communication nodes 9 of the subsystem 57.

The walls between the rooms 46, 47, 48, 49 on the one hand, and the corridor 54 on the other hand inhibit wireless communication 10 from the communication nodes 9 in each of the rooms 46, 47, 48, 49 and their respective different subsystems 50, 51, 52, 53 of the building infrastructure system 1 with the communication nodes 9 of the subsystem 57 in the corridor 54.

The separation walls between the rooms 46, 47, 48, 49 inhibit wireless communication 10 between the communication nodes 9 in adjacent rooms 46, 47, 48, 49 and different subsystems 50, 51, 52, 53 of the building infrastructure system 1.

In the embodiment of fig. 7, the subsystem 57 includes four first coupling devices 2 located at the surface of the wall separating the flight of rooms 46, 47, 48, 49 from the corridor 54 facing towards the corridor 54 running in parallel to the flight of rooms 46, 47, 48, 49. In particular, each of the first coupling devices 2 arranged in the corridor 54 is associated with one second coupling device 3 located in one of the rooms 46, 47, 48, 49.

In the embodiment depicted in fig. 7, each subsystem 50, 51, 52, 53 includes the second coupling device 2 located at the interior surface of a wall separating the flight of rooms 46, 47, 48, 49 from the corridor 54 running in parallel to the fight of rooms 46, 47, 48, 49.

The first coupling devices 2 and the communication nodes 9 located in the corridor 54 correspond to the first subsystem 4. Each second coupling device 2 located one of the rooms 46, 47, 48, 49 together with the communication nodes 9 in the respective room 46, 47, 48, 49 corresponds to a respective second subsystem 5. The wireless communication 7 between each of the first coupling devices 2 in the corridor 54 and the associated second coupling device 3 in one the of the rooms 46, 47, 48, 49 connects the respective second subsystem 5 in one room 46, 47, 48, 49 with the first subsystem 4 in the corridor 54. As a consequence, the building infrastructure system 1 extending over the corridor 54 and the flight of rooms of the embodiment of fig. 7 is controllable via a device that includes any one of the communication nodes 9 located in the corridor 54 and the flight of rooms 46, 47, 48, 49.

Fig. 8 shows an application scenario that illustrates directly connecting communication nodes 9 though a barrier 6 using a building infrastructure system 1 according to an embodiment.

The building includes a series of rooms 46, 47, 48, and 49. In each of the rooms 46, 47, 48, and 49, a subsystem 50, 51, 52, 53 corresponding to one implementation of the first subsystem 2 is arranged, including a number of communication nodes 9. The communication nodes 9 of each of the subsystems 50, 51, 52, 53 are connected to each other by wireless communication 10 in a fully meshed mesh communication topology.

The corridor 54 extends in parallel to the flight of rooms 46, 47, 48, 49. In the corridor 54, a further subsystem 57 including four communication nodes 9 is located.

The walls between the rooms 46, 47, 48, 49 on the one hand, and the corridor 54 on the other hand inhibit wireless communication 10 from the communication nodes 9 in each of the rooms 46, 47, 48, 49 and their respective different subsystems 50, 51, 52, 53 of the building infrastructure system 1 with the communication nodes 9 of the subsystem 57 in the corridor 54.

The separation walls between the rooms 46, 47, 48, 49 inhibit wireless communication 10 between the communication nodes 9 in adjacent rooms 46, 47, 48, 49, and hence, different subsystems 50, 51, 52, 53 of the building infrastructure system 1.

The building infrastructure system 1 of fig. 8 dispenses with arranging second coupling devices 3 in the corridor 54 and arranges first coupling devices 2 within each room 46, 47, 48, 49 of the flight of rooms 46, 47, 48, 49. Each of the subsystems 50, 51, 52, 53 of the building infrastructure system 1 corresponds to a first subsystem 4 including the communication nodes 9 within the respective room 46, 47, 48, 49 of the flight of rooms 46, 47, 48, 49 and the first coupling device 2 located in the same room 46, 47, 48, 49 of the flight of rooms 46, 47, 48, 49.

The first coupling device 2 in each of room 46, 47, 48, 49 performs direct wireless communication 7 through the wall of the room 46, 47, 48, 49 facing towards the corridor 54 (the barrier 6 in fi. 98) with a communication node 9 of the second subsystem 5 located within range on the corridor 54. Thereby the communication nodes 9 of the second subsystem 5 located in the corridor 54 integrate the subsystems 50, 51, 52, 53 of the building infrastructure system 1 located in the room 46, 47, 48, 49 into the building infrastructure system 1.

All steps which are performed by the various entities described in the present disclosure as well as the functionalities described to be performed by the various entities are intended to mean that the respective entity is adapted to or configured to perform the respective steps and functionalities.

In the claims as well as in the description the word "comprising" does not exclude the presence of other elements or steps.

The indefinite article "a" or "an" does not exclude a plurality.

A single element or other unit may fulfill the functions of several entities or items recited in the claims. The mere fact that different dependent claims recite certain measures and features of the control circuit does not exclude that a combination of these measures and features cannot combined in an advantageous implementation.

The features described in the discussion of specific embodiments and depicted in the figures may be combined with each other for the invention defined in the attached claims.

## Claims

1. Building infrastructure system comprising at least a first subsystem (4) and a second subsystem (5),
wherein the first and the second subsystem (4, 5) each comprise plural infrastructure devices that each include a communication node (9) connected via a wireless mesh communication network (10), and
the first and the second subsystem (4, 5) are arranged at different sides of a barrier (6),
at least the first subsystem (4) comprises a first coupling device (2) for connecting the first subsystem (4) and the second subsystem (5), and
the first coupling device (2) is configured to communicate in the first subsystem (4) and to transmit and receive signals to the second subsystem (5) using wireless communication via the barrier (6).

2. Building infrastructure system according to claim 1, wherein
the second subsystem (5) comprises a second coupling device (3) configured to receive from and transmit signals to the first coupling device (4) using the wireless communication (7) via the barrier (6) and to communicate in the second subsystem (5).

3. Building infrastructure system according to claim 2, wherein
the first coupling device (2) and the second device (3) are arranged adjacent to each other on opposing sides (6.1, 6.2) of the barrier (6).

4. Building infrastructure system according to claim 3, wherein
the first coupling device (2) and the second coupling device (3) each include an antenna with an antenna pattern adapted to transmit and receive the wireless signals to and from the respective other of the first coupling device (2) and the second coupling device (3).

5. Building infrastructure system according to claim 4, wherein
the antenna of the first coupling device (2) and the second coupling device (3) each include the antenna pattern configured to transmit and receive the wireless signals towards a mounting plane (29) of the first coupling device (4) or the second coupling device (5) for mounting the first coupling device (4) or the second coupling device (5) attached to the barrier (6).

6. Building infrastructure system according to one of claims 3 to 5, wherein
the first coupling device (2) and the second coupling device (3) each include an transfer element (27) configured to transfer wirelessly energy between the first coupling device (2) and the second coupling device (3) through the barrier (6).

7. Building infrastructure system according to claim 6, wherein
the transfer element (27) of the first coupling device (2) and of the second coupling device (3) each include a coil magnetically coupled to each other and arranged on a common axis of the first coupling device (2) and the second coupling device (3) that extends through the barrier (6) orthogonally to surfaces (6.1, 6.2) of the barrier (6).

8. Building infrastructure system according to one of claims 2 to 7, wherein
the second coupling device (3) comprises a satellite receiver configured to receive a satellite signal (43) from at least one satellite (SAT), and
the second coupling device (3) is configured to transmit at least one of the received satellite signal (43) and information (44) included in the received satellite signal to the first coupling device (2) using the wireless communication (7) via the barrier (6).

9. Building infrastructure system according to claim 8, wherein
the information included in the satellite signal comprises current time information.

10. Building infrastructure system according to claim 8 or 9, wherein
the information included in the satellite signal (43) comprises navigation information.

11. Building infrastructure system according to claim 1, wherein
the first coupling device (2) is configured to directly transmit and receive signals to at least one of the building infrastructure devices (9) of the second subsystem (5) using wireless communication (7) via the barrier (6).

12. Building infrastructure system according to one of the preceding claims, wherein
the barrier (6) includes a least one of a window (16), an interior wall, a ceiling, an exterior wall, and a roof of a building.

13. Building infrastructure system according to one of the preceding claims, wherein
at least the first subsystem (4) comprises at least one further first coupling device 32 for connecting the first subsystem (4) and the second subsystem (5), and the first coupling device (2) and the at least one further first coupling device (32) are configured to communicate in the first subsystem (4) and to transmit and receive signals to the second subsystem (5) using wireless communication (7.1, 7.2) via the barrier (6).

14. Wireless coupling device for a building infrastructure system (1), the wireless coupling device comprising
a communication node (21) configured to receive from and transmit to a communication node (9) of at least one building infrastructure device of a first subsystem (4) of the building infrastructure system (1) signals via a wireless communication (7), and
a communication element (22) configured to receive from and transmit signals to at least one second subsystem (5) of the building infrastructure system (1) using wireless communication (7) via a barrier (6) separating the first subsystem (2) and the second subsystem (3).
